**Europäisches Patentamt**

**European Patent Office**

**Office européen des brevets**

(19)

(11) Veröffentlichungsnummer: **0 220 369**
**A2**

(12) # EUROPÄISCHE PATENTANMELDUNG

(21) Anmeldenummer: **86107052.2**

(22) Anmeldetag: **23.05.86**

(51) Int. Cl.⁴: **G 01 N 27/40**

(30) Priorität: **28.09.85 DE 3534717**

(43) Veröffentlichungstag der Anmeldung: **06.05.87**
**Patentblatt 87/19**

(84) Benannte Vertragsstaaten: **DE FR GB NL**

(71) Anmelder: **Drägerwerk Aktiengesellschaft, Moislinger Allee 53-55, D-2400 Lübeck 1 (DE)**

(72) Erfinder: **Bernstein, Christoph, Dr. rer. nat. Phys.-Chem., Dorfstrasse 2a, D-2400 Lübeck (DE)**
Erfinder: **Hölscher, Uvo, Dr., Stettiner Strasse 6a, D-2406 Stockelsdorf (DE)**

(54) **Elektrodenanordnung für eine elektrochemische Messzelle.**

㊿ Eine Elektrodenanordnung für eine elektrochemische Meßzelle, bei welcher die Meßelektrode als dünne elektrisch leitfähige Schicht auf der dem Elektrolyten zugewandten Seite einer für den Elektrolyten undurchlässigen Diffusionsmembran aufgebracht und mit einem elektrisch leitfähigen Kontaktelement verbunden ist, soll derart verbessert werden, daß die dem Elektrolyten ausgesetzte Fläche der Elektrodenschicht durch die Elektrodenanordnung selbst bestimmt wird, die Kontaktfläche zwischen Elektrodenschicht und Kontaktelement großflächig in die Elektrodenanordnung integriert ist und die Elektrodenanordnung eine für die Handhabung stabile Form besitzt. Dazu ist vorgesehen, daß die Elektrodenschicht (4) mit einer eine Aussparung (51) aufweisenden Abdeckung (5), mit welcher das Kontaktelement (6) flächig auf die Elektrodenschicht (4) angedrückt ist, elektrolyt- und gasundurchlässig verbunden ist.

- 1 -

Drägerwerk AG
Moislinger Allee 53-55, 2400 Lübeck, DE

## Elektrodenanordnung für eine elektrochemische Meßzelle

Die Erfindung betrifft eine Elektrodenanordnung für eine elektrochemische Meßzelle, bei welcher die Meßelektrode als dünne elektrisch leitfähige Schicht auf der dem Elektrolyten zugewandten Seite einer für den Elektrolyten undurchlässigen Diffusionsmembran aufgebracht und mit einem elektrisch leitfähigen Kontaktelement verbunden ist.

Derartige Elektrodenanordnungen sind sowohl in polarographischen Zellen als auch in Brennstoffzellen bekannt. Diese besitzen in einem Gehäuse eine Elektrodenanordnung, bestehend aus Meßelektrode und Referenzelektrode, welche beide mit einem Elektrolyten in Verbindung stehen. Die Meßelektrode ist häufig als Diffusionsmembran ausgebildet, welche zum einen den Elektrolyt-Raum des Meßzellengehäuses gegenüber dem zu messenden Medium abgrenzt und andererseits für das zu messende Medium durchlässig ist. Eine solche Meßzelle ist in der GB-PS 12 00 595 beschrieben.

Ein weit verbreiteter Anwendungsbereich dieser Meßzellen besteht in der Messung des Sauerstoffpartialdruckes der Umgebungsatmosphäre. Dabei ist die Diffusionsmembran in einer zweischichtigen Struktur ausgebildet, welche auf einer Teflon-Trägerfolie mit einem dünnen Film aus elektrisch leitfähigem Material versehen ist. Die Teflon-Membran ist für den Elektrolyten undurchlässig, erlaubt jedoch eine Permeation des Sauerstoffs aus der Gasphase in den Elektrolyt-Raum. Die elektrisch leitfähige Schicht auf der Teflon-Membran ist für den Elektrolyten durchlässig, so daß eine Reaktion zwischen dem eindiffundierten Sauerstoff und dem Elektrolyten an der Elektrodenfläche stattfindet. Es entsteht ein Meßsignal, welches über das Kontaktelement an eine Auswerteeinheit weitergeleitet und von ihr angezeigt wird.

Bei der Ausgestaltung der Meßzelle kommt es darauf an, einen definierten, gleichbleibenden Bereich auf der dem Elektrolyten zugänglichen Meßelektrodenfläche zu schaffen, an dem die durch die Diffusionsmembran zur Elektrodenschicht durchgedrungenen Gasmoleküle mit dem Elektrolyten reagieren. Dadurch erhält man ein gleichbleibendes und reproduzierbares Signal. Bei der bekannten Ausführung geschieht dies dadurch, daß der Elektrolyt-Raum eine Verengung aufweist, über welche die Diffusionsmembran mit der aufgedampften Meßelektrode aufgelegt und dichtend befestigt wird. Die Kontaktierung der Meßelektrode erfolgt über einen in dem Gehäuse der Meßzelle um die Verengung des Elektrolyt-Raumes angeordneten Kontaktring. Der elektrische Kontakt wird dadurch hergestellt, daß das Auflegen der Diffusionsmembran auf sorgfältige Weise geschieht, so daß eine flächige Berührung der aufgedampften Elektrodenschicht mit dem Kontaktring stattfindet. Hierzu wird die Diffusionsmembran vom Außenraum her durch einen Positionierring gegen den in der Stirnfläche des Meßzellengehäuses angeordneten Kontaktring gedrückt.

Die bekannte Elektrodenanordnung erfordert jedoch zur Bespannung der elektrochemischen Meßzelle mit einer Diffusionsmembran mehrere Arbeitsschritte, welche ein sorgfältiges Handhaben der Membran selbst und einen vorsichtigen Umgang mit der Elektrodenschicht erfordert. Um ein sicheres, flächiges Kontaktieren der metallischen Elektrode mit dem Kontaktring zu gewährleisten, ist eine zusätzliche Halterung durch eine anschraubbare Druckscheibe erforderlich. Die Handhabung einer solchen Druckscheibe wird dadurch erschwert, daß die äußerst dünne, schon aufgelegte Membran dazu neigt, sich aufzurollen oder am Rand aufzuwerfen.

Eine solche Druckscheibe muß auch dafür sorgen, daß die Meßelektrode gerade am Randbereich des Gehäuses zum Elektrolytraum hin dicht aufliegt, um zu verhindern, daß Spalte entstehen, in denen der Elektrolyt nicht in vollem Maße an den elektrochemischen Umsetzungen teilnimmt, wodurch das Meßergebnis in nicht reproduzierbarer Weise beeinflußt wird.

Der vorliegenden Erfindung liegt daher die Aufgabe zugrunde, eine Elektrodenanordnung der genannten Art so zu verbessern, daß die dem Elektrolyten ausgesetzte Fläche der Elektrodenschicht durch die Elektrodenanordnung selbst bestimmt wird, die Kontaktfläche zwischen Elektrodenschicht und Kontaktelement großflächig in die Elektrodenanordnung integriert ist und die Elektrodenanordnung eine für die Handhabung stabile Form besitzt.

Die Lösung der Aufgabe wird dadurch erreicht, daß die Elektrodenschicht mit einer eine Aussparung aufweisenden Abdeckung, mit welcher das Kontaktelement flächig auf die Elektrodenschicht angedrückt ist, elektrolyt- und gasundurchlässig verbunden ist.

Der Vorteil der Erfindung ist hauptsächlich darin zu sehen, daß nunmehr die fertig kontaktierte Elektrodenanordnung in ein Gehäuse beliebiger Form mit herkömmlichen Dichtungsmethoden, wie z. B. einer O-Ring-Dichtung, eingebracht werden kann. Dadurch wird die Handhabung der hochempfindlichen Elektrodenanordnung erleichtert und ein Hantieren an der schon eingespannten Membran mit ihrer gegen mechanische Beschädigungen hochempfindlichen Elektrodenschicht zum Zwecke der elektrischen Kontaktierung wird vermieden. Dadurch wird die Bespannung einer Meßzelle mit einer neuen Elektrodenanordnung wesentlich erleichtert. Außerdem wird eine lücken- und spaltfreie Abdichtung als Begrenzung der meßaktiven Elektrodenfläche geschaffen. Die gas- und elektrolytundurchlässige Abdeckung unterbricht den unerwünschten Diffusionsweg zwischen Elektrolytraum und Umgebung, durch den entweder Elektrolytflüssigkeit entweichen oder Gaszutritt von außen erfolgen könnte. Durch die Abdeckung und das Kontaktelement wird eine Versteifung der Elektrodenanordnung erzielt, die ihre Handhabung sehr erleichtert. Die Anwendung der Kontaktierung ist nicht auf lediglich eine Elektrodenschicht an der Membran begrenzt. Bei Anbringung mehrerer, voneinander getrennten Elektrodenschichten kann jede für sich mit einer entsprechenden Kontaktierung versehen sein.

In weiterer Ausgestaltung der Erfindung kann vorgesehen sein, daß die Aussparung mit einer elektrolytdurchlässigen Stützmembran gefüllt ist. Diese Stützmembran gibt der Elektrodenanordnung eine erhöhte mechanische Stabilität. Weiterhin soll sie die Bildung und den Antransport von Gasblasen zur Meßelektrode verhindern und die Benetzung der Elektrode sicherstellen. In Frage kommen Ionenaustauschermembranen oder auch hydrophile poröse Körper, wie z. B. PVC oder Keramik.

In besonders vorteilhafter Weise besteht die Abdeckung aus einer schweißfähigen Kunststoffolie. Durch das Aufschweißen durchdringt der Kunststoff die poröse Elektrodenschicht in flüssiger Form, bildet einen festen Verbund mit der Diffusionsmembran und sorgt somit für ein unlösbares, gesichertes Kontaktieren der Elektrodenschicht. Die Kunststoffolie dient gleichzeitig als Dichtfläche für einen O-Ring oder beispielsweise einen Dichtkrater. Zweckmäßigerweise wird das Kontaktelement aus einem Drahtstück gebildet, welches zwischen der Elektrodenschicht und der Abdeckung entlang der Oberfläche der Abdeckung verläuft, so daß die nachfolgende Befestigung bzw. Verschweißung der Abdeckung eine flächig haftende Kontaktierung der Elektrodenschicht bewirkt.

Es erweist sich als vorteilhaft, auf der dem Elektrolyten abgewandten Seite der Diffusionsmembran in deren Randbereich eine mit einer Öffnung versehene Schutzschicht anzubringen, welche die Steifigkeit der Elektrodenanordnung noch weiter erhöht und auch als Auflage für eine Klemmbefestigung der Elektrodenanordnung dienen kann.

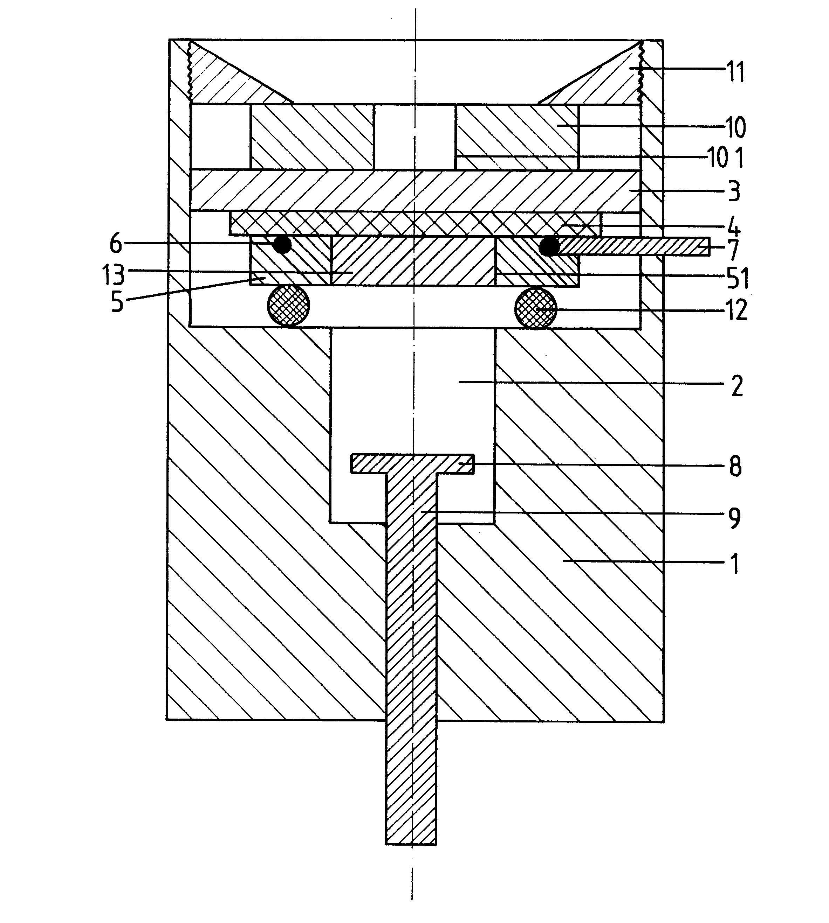

Ein Ausführungsbeispiel der Erfindung ist anhand der Zeichnung dargestellt und wird im folgenden näher erläutert.

Die einzige Figur zeigt den Schnitt durch eine Meßzelle mit der Elektrodenanordnung.

Der Übersichtlichkeit halber ist die Elektrodenanordnung nicht maßstäblich zum Gehäuse der Meßzelle gezeichnet worden.

Das Gehäuse 1 besitzt einen Innenraum 2, welcher mit einem nicht dargestellten Elektrolyten gefüllt wird. Dieser Elektrolytraum 2 wird zur Umgebung hin durch die Diffusionsmembran 3 abgegrenzt. Auf der dem Elektrolytraum 2 zugewandten Fläche der Diffusionsmembran 3 ist eine kreuzschraffiert gezeichnete Schicht 4 als Meßelektrode aufgebracht. Auf der Elektrodenschicht 4 ist eine Abdeckung in Form einer ringförmigen Folie 5 aufgeschweißt, welche einen an der Elektrodenschicht 4 ringförmig verlaufenden Draht 6 als Kontaktelement gegen die Elektrodenschicht 4 andrückt. Der Draht 6 wird mit der Leitung 7 ebenso wie Leitung 9 der Gegenelektrode 8 an einer nicht dargestellten Auswerteeinheit angeschlossen. Die Aussparung 51 der Folie 5 ist mit einer Stützmembran 13 ausgefüllt. Die Diffusionsmembran 3 besitzt eine Schutzschicht 10, auf die ein Gewindering 11 geschraubt ist, so daß die gesamte Elektrodenanordnung mit ihrer Abdeckung 5 auf einem O-Ring 12 aufliegt und somit den Elektrolytraum 2 gegenüber der Umgebung abdichtet.

## Patentansprüche

1. Elektrodenanordnung für eine elektrochemische Meßzelle, bei welcher die Meßelektrode als dünne elektrisch leitfähige Schicht auf der dem Elektrolyten zugewandten Seite einer für den Elektrolyten undurchlässigen Diffusionsmembran aufgebracht und mit einem elektrisch leitfähigen Kontaktelement verbunden ist, dadurch gekennzeichnet, daß die Elektrodenschicht (4) mit einer eine Aussparung (51) aufweisenden Abdeckung (5), mit welcher das Kontaktelement (6) flächig auf die Elektrodenschicht (4) angedrückt ist, elektrolyt- und gasundurchlässig verbunden ist.

2. Elektrodenanordnung nach Anspruch 1, dadurch gekennzeichnet, daß sich in der Aussparung (51) eine elektrolytdurchlässige Stützmembran (13) befindet.

3. Elektrodenanordnung nach Anspruch 1, dadurch gekennzeichnet, daß die Abdeckung (5) mit der Diffusionsmembran (3) verschweißt ist.

4. Elektrodenanordnung nach Anspruch 1, dadurch gekennzeichnet, daß das Kontaktelement aus einem zwischen der Abdeckung (5) und der Elektrodenschicht (4) eingelegten Drahtstück (6) besteht.

5. Elektrodenanordnung nach Anspruch 1, dadurch gekennzeichnet, daß auf der dem Elektrolyten abgewandten Seite der Diffusionsmembran (3) in deren Randbereich eine mit einer Öffnung (101) versehene Schutzschicht (10) angeordnet ist.